Europäisches Patentamt

European Patent Office

Office européen des brevets

(19)

(11) Numéro de publication: **0 262 001**
**A1**

## (12) DEMANDE DE BREVET EUROPEEN

(21) Numéro de dépôt: 87401527.4

(22) Date de dépôt: 01.07.87

(51) Int. Cl.⁴: **G 03 B 27/32**

(30) Priorité: 29.08.86 CA 517239

(43) Date de publication de la demande:
30.03.88 Bulletin 88/13

(84) Etats contractants désignés:
AT BE CH DE ES FR GB GR IT LI LU NL SE

(71) Demandeur: DUO MACHINERIE CORPORATION
125, Cossette
Salaberry-De-Valleyfield Quebec J6T 3T7 (CA)

(72) Inventeur: **Ducos, Michel**
**45, rue Cantogril**
**F-31320 Escalqueus (FR)**

**Gherardi, Olivier**
**1, rue Joron, Apt. 3**
**Valleyfield Quebec J6S 4Z8 (CA)**

**Demers, Jocelyn**
**Casier Postal 33**
**Coteau-du-Lac Quebec JOP 1BO (CA)**

**Demers, Gilles**
**71, rue Gosselin Grande-Ile**
**Valleyfield Quebec (CA)**

(74) Mandataire: **Rodhain, Claude et al**
**Cabinet Claude Rodhain 30, rue la Boétie**
**F-75008 Paris (FR)**

(54) **Photocopieur à dispositif modulaire d'exposition des documents.**

(57) Un photocopieur pour la reproduction photographique qui comporte une unité centrale (1) munie de dispositifs de déroulement, de coupe et de transport du papier photographique, une chambre d'insolation de ce papier, et une unité de développement des épreuves. Le photocopieur se caractérise par le fait que le dispositif d'exposition (2) due document original est modulaire et amovible. Plusieurs modules adaptés chacun à l'exposition d'un document original de type particulier peuvent donc être montés sur l'unité centrale (1) pour ainsi permettre la reproduction de plusieurs types de documents. Le photocopieur comporte en outre une cassette (15) papier amovible dont l'enveloppe est fabriquée en un matériau plastique par un procédé de thermoformage. Cette enveloppe définit deux flasques latérales entre lesquelles un mandrin (49) supportant un rouleau (14) de papier photographique est monté en force. Deux rondelles de feutre (52) sont collées aux deux extrémités du mandrin (49), de sorte que le feutre frotte sur les flasques latérales de l'enveloppe pour ainsi éviter la rotation du mandrin par inertie et aussi produire une certaine tension dans le papier lors de son déroulement. Un module de préparation et de régénération automatique des bains chimiques utilisés dans l'unité de développement peut aussi être associé au photocopieur.

Fig. 2a

EP 0 262 001 A1

**Description**

"Photocopieur à dispositif modulaire d'exposition des documents."

La présente invention concerne un photocopieur ayant un dispositif d'exposition du document original qui est modulaire et amovible. L'invention se rapporte plus spécifiquement à un photocopieur du type précité qui est spécialement conçu pour la reproduction photgraphique.

Les photocopieurs pour la reproduction photographique connus jusqu'à ce jour ne sont adaptés qu'à la reproduction d'un seul type de document, notamment les photographies, sans possibilité de traitement d'un autre type de document.

Le but principal de la présente invention est donc de réaliser un photocopieur pour la reproduction photographique capable de produire des épreuves à partir de documents divers, soit par exemple des photographies, des diapositives, ou encore des images vidéo.

Plus particulièrement, la présente invention concerne un photocopieur pour la reproduction photographique comprenant:
une unité centrale munie de moyens d'alimentation en papier photographique, de moyens de positionnement du papier d'alimentation en position d'insolation, de moyens de développement photographique du papier insolé, de moyens de séchage du papier développé et de moyens de récupération du papier développé et séché, incluant des moyens de transport du papier insolé à partir de sa position d'insolation à travers les moyens de développement et de séchage vers les moyens de récupération du papier; et
un module amovible d'exposition d'un document original à reproduire.

L'unité centrale comporte en outre des moyens de support et de positionnement du module d'exposition amovible, le module d'exposition comprend des moyens pour former une image lumineuse à partir du document original, et l'unité centrale inclut des moyens pour exposer le papier photographique en position d'insolation à l'image lumineuse formée par le module d'exposition pour ainsi insoler le papier.

Le photocopieur selon l'invention est donc formé de deux parties principales, soit une unité centrale et un module d'exposition du document original qui est amovible. Lorsque l'utilisateur dispose de plusieurs modules d'exposition amovibles, adaptés chacun à l'exposition d'un document original d'un type particulier, il lui est possible de reproduire à l'aide du photocopieur divers types de documents simplement en changeant le module d'exposition du photocopieur.

Cette originalité fait du photocopieur selon l'invention une machine non limitée dans son évolution. Grâce à une seule machine (photocopieur), il devient donc possible d'obtenir des épreuves à partir de documents variés, ce qui nécessitait auparavant l'emploi de photocopieurs spécifiquement adaptés à chaque type de document original.

La présente invention a également pour but de réaliser un photocopieur pour la reproduction photographique qui présente plusieurs autres avantages par rapport à ceux présentement disponibles sur le marché.

Les autres avantages et caractéristiques de la présente invention apparaitront plus clairement à la lecture de la description qui suit d'un mode de réalisation préféré du photocopieur, donné à titre d'exemple non limitatif seulement avec référence aux dessins annexés dans lesquels:

La Figure 1 illustre un type d'assemblage utilisable pour monter le module d'exposition des documents sur l'unité centrale du photocopieur;

La Figure 2a) illustre la structure globale et le fonctionnement d'un photocopieur selon l'invention sur lequel est monté un module photocopie;

La Figure 2b) illustre un module projecteur de diapositives permettant le reproduction par le photocopieur de diapositives sur papier photographique;

La Figure 3 illustre le mode d'entraînement de transporteurs papier utilisés dans des cuves de développement du photocopieur de la Figure 2a);

Les Figures 4, 5 et 6 illustrent de façon détaillée la structure des transporteurs papier utilisés dans les cuves de développement du photocopieur;

Les Figures 7, 8, 9 et 10 illustrent un exemple de réalisation de la cassette papier modulaire faisant partie du photocopieur illustré à la Figure 2a) des dessins;

La Figure 11 est un schéma d'un module pouvant être associé au photocopieur selon l'invention pour la préparation et la régénération des bains nécessaires au développement des épreuves produites par le photocopieur.

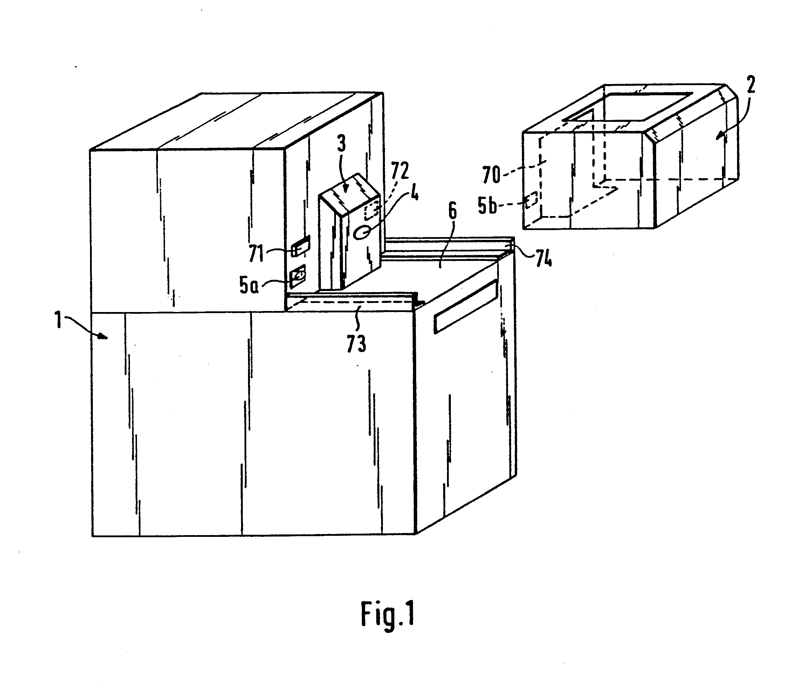

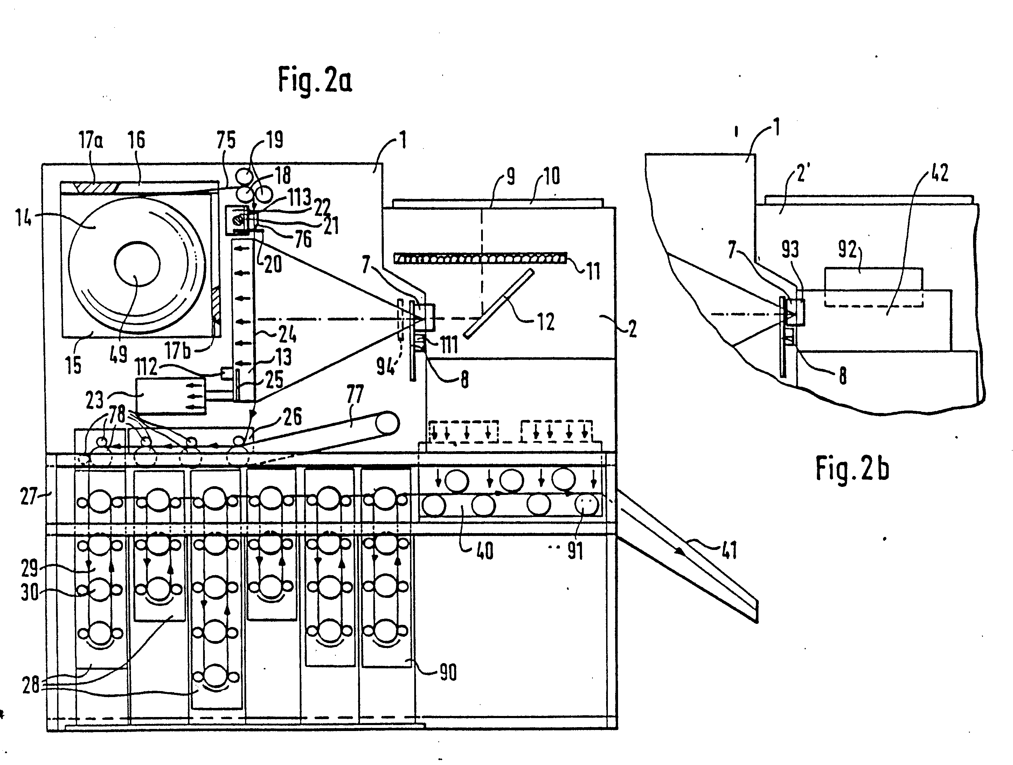

Ainsi que l'illustrent les Figures 1 et 2a), le photocopieur selon l'invention se compose d'une unité centrale 1 et d'un module amovible 2 d'exposition des documents originaux à reproduire.

L'enveloppe métallique de l'unité centrale 1 définit une surface horizontale 6 sur laquelle le module d'exposition 2 vient se poser, ainsi qu'un décrochement externe 3. Ce décrochement 3 s'emboîte dans une ouverture 70 pratiquée à travers l'enveloppe du module d'exposition 2. Ce dernier comporte un objectif 7 qui, lors de l'emboîtement du décrochement 3 dans l'ouverture 70, pénètre dans un orifice 4 pratiqué à travers la paroi du décrochement 3. L'objectif 7 prend ainsi position face à une tourelle des filtres 8. Un dispositif (non illustré), qui peut prendre plusieurs formes différentes, assure une étanchéité à la lumière entre l'objectif 7 et l'orifice 4.

Le module d'exposition 2 peut être maintenu en place sur l'unité centrale 1 par différents moyens; par exemple deux aimants 71 et 72 de forte puissance montés sur l'enveloppe métallique de l'unité centrale 1 ou un système de rails latéraux 73 et 74 fixés sur la surface 6 de chaque côté de l'unité 1.

L'alimentation électrique et donc le contrôle du module 2 sont réalisés à travers un ensemble prise mâleprise femelle dont la prise mâle 5a et la prise femelle 5b se connectent automatiquement l'une à l'autre lors de la mise en place du module 2 sur l'unité centrale 1, par exemple lors du glissement du module sur les rails 73 et 74.

Le module d'exposition 2 illustré sur la Figure 2a) est un module photocopie. Celui-ci comporte une vitre 9 sur laquelle est posé face vers le bas un document à reproduire, lequel est ensuite recouvert par un couvercle 10. Le module photocopie comporte de plus deux lampes telles que 11 placées de chaque côté de ce module. Lors du déclenchement de la séquence de reproduction, les deux lampes 11 éclairent le document pour ainsi former une image lumineuse qui est projetée sur le papier photographique sensible à la lumière accolé sur la surface 24, après avoir été reflétée et inversée par un miroir 12 et traversé l'objectif 7.

L'unité centrale 1 comporte de plus une tourelle 8 sur laquelle sont montés trois filtres (bleu, vert et rouge) qui interceptent successivement l'image lumineuse projetée sur la feuille de papier photographique pendant une courte période de temps prédéterminée afin de limiter le temps d'insolation du papier sensible et de modifier la colorimétrie. Il est facile de concevoir que la tourelle 8 comporte une plaque circulaire sur laquelle sont montés les trois filtres bleu, vert et rouge, également circulaires et écartés l'un par rapport à l'autre d'un angle de 90° par rapport à l'axe de rotation de la tourelle. La portion de la tourelle 8 située entre les deux filtres les plus éloignés permet d'intercepter l'image lumineuse après et avant l'insolation du papier photographique. Il est à noter qu'une vitesse très rapide de rotation de la tourelle est requise, ainsi qu'un arrêt sans inertie de celle-ci. A cet effet, la tourelle 8 peut être entraînée par un moteur à courant continu avec frein 111. Si une vitesse insuffisante de la tourelle 8 devait nuire au résultat, on peut ajouter un obturateur 94 positionné devant la tourelle 8 et qui se ferme pour intercepter l'image lumineuse entre les mises en place des divers filtres.

Le papier sensible est stocké sous forme d'un rouleau 14 à l'intérieur d'une cassette 15 logée dans une cavité 16 de l'unité centrale 1 prévue à cet effet. Elle est maintenue en place par deux presseurs 17a et 17b. Ces deux presseurs 17a et 17b peuvent être formés par une épaisseur de caoutchouc mousse adhésive des deux côtés, dont un côté adhère à la surface interne de la cavité 16 et l'autre côté retient une plaque mince de métal qui s'appuie sur la cassette 15. Ainsi, pour monter la cassette dans la cavité 16 couverte au moins d'un côté, il suffit de glisser celle-ci à travers l'ouverture de la cavité dans la direction de l'axe du rouleau 14 et les deux presseurs 17a et 17b s'occupent de positionner la cassette à la position requise.

L'unité centrale 1 comporte de plus un rouleau de caoutchouc 18 mis en rotation à l'aide d'un moteur pas à pas, et qui entraîne le papier 75 sortant de la cassette pour ainsi dérouler le rouleau 14. Le papier 75 est maintenu pressé sur le rouleau entraîneur 18 par deux autres rouleaux 19 formant un angle de 90° par rapport au rouleau 18 afin d'augmenter la surface d'adhérence du papier 75 sur le rouleau 18.

L'unité centrale 1 comprend en outre un châssis d'insolation qui assure un placage parfait du papier 75 sur une plaque perforée 24. Ce châssis d'insolation est formé d'un caisson 13 dont la partie arrière est munie d'un extracteur d'air 23 et la partie avant de la plaque perforée 24. Entre ces deux parties, un obturateur 25 commandé par un solénoïde 112 peut arrêter ou laisser passer l'air afin de libérer ou de plaquer le papier 75. Lorsque le papier 75 a été déroulé à la longueur requise, l'obturateur 25 est ouvert et l'extracteur d'air 23 produit par aspiration d'air une dépression dans le caisson 13 de sorte que le papier 75 est plaqué contre la plaque perforée 24 et maintenu en position d'insolation.

Lorsque le papier 75 a été insolé tel que décrit précédemment, une lame de coupe rotative 20 est déplacée latéralement à l'aide d'une vis sans fin 21 transversale entraînée en rotation à l'aide d'un moteur électrique à courant continu dont le sens de rotation peut être inversé. Dans son mouvement, la lame rotative 20 s'appuie sur une lame fixe 76 afin de découper proprement le papier 75. L'aller et le retour de la lame circulaire 20 est assuré par la vis sans fin 21 coopérant avec un écrou qui est solidaire au bloc 113 supportant la lame 20. A chaque coupe, le sens de rotation du moteur et par conséquent de la vis 21 est inversé de sorte que le papier peut être découpé alternativement par un mouvement de gauche à droite de la lame 20 et de droite à gauche de cette même lame.

Lorsque le papier 75 a été découpé, l'obturateur 25 se ferme et la dépression dans le caisson 13 est ainsi supprimé de sorte que la feuille de papier photographique découpée chute dans un transporteur 26 qui la conduit dans l'unité de développement 27 du photocopieur. Le transporteur 26 comporte un convoyeur 77 sur lequel la feuille de papier tombe, celle-ci étant alors dirigée vers des rouleaux transporteurs 78 qui la dirigent vers l'unité de développement 27.

Tel qu'illustré sur la Figure 2a), l'unité de développement 27 est en fait une succession de cuves telle que 28 remplies de bains chimiques et de bains de lavage. Des résistances électriques peuvent être disposées dans les cuves 28 pour chauffer les bains si nécessaire, l'alimentation de ces résistances étant contrôlée par des thermostats soumis à la température des bains. La feuille de papier insolée passe de cuve en cuve grâce à des transporteurs papier tels que 29 illustrés de façon schématique et incomplète sur la Figure 2a). Plus spécifiquement, un transporteur rapier 29 est positionné dans chaque cuve.

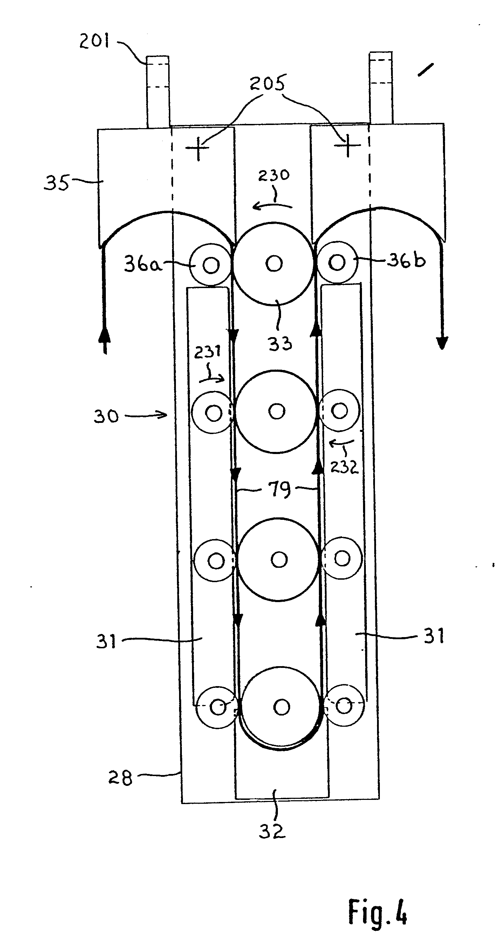

La structure exacte de chaque transporteur papier 29 est illustrée de façon détaillée aux Figures 4, 5 et 6 des dessins. Ceux-ci comportent chacun plusieurs ensembles de trois rouleaux presseurs tels que 30 tournant tous à la même vitesse et incluant un rouleau médian 33 et deux rouleaux latéraux 35a et 36b. Le nombre d'ensembles 30 de rouleaux presseurs dépend de la hauteur de la cuve 28 correspondante. Pour fins d'exemple, quatre ensembles 30 sont représentés sur les Figures 4, 5 et 6. Les axes des trois rouleaux presseurs de chaque ensemble 30 sont situés dans un même plan horizontal, et les ensembles sont disposés en étages les uns par rapport aux autres.

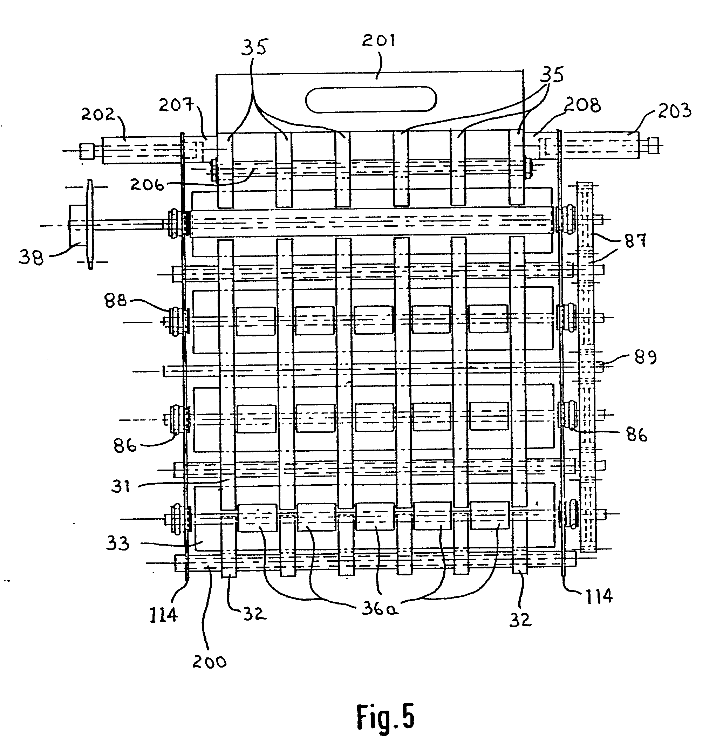

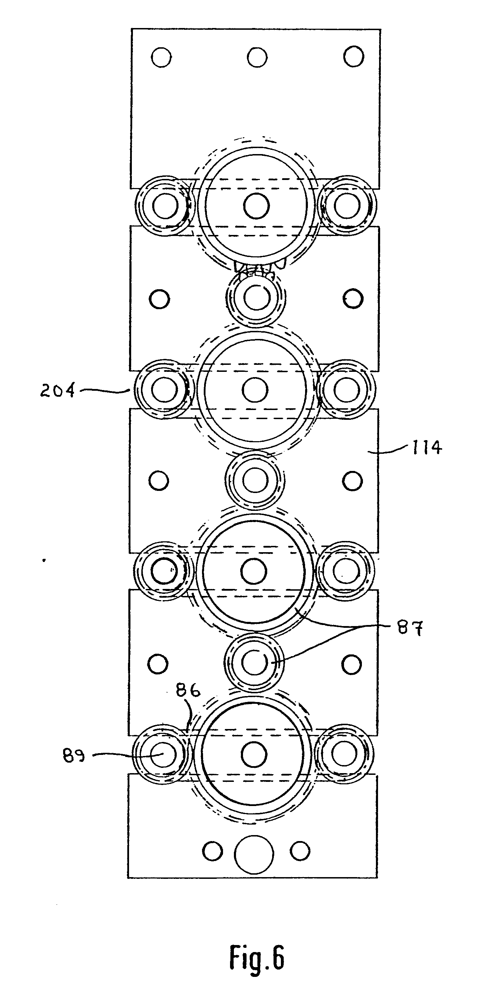

Tel qu'illustré aux Figures 5 et 6, chaque transporteur papier 29 comprend deux flasques latérales 114 entre lesquelles tous les rouleaux du transporteur papier sont montés.

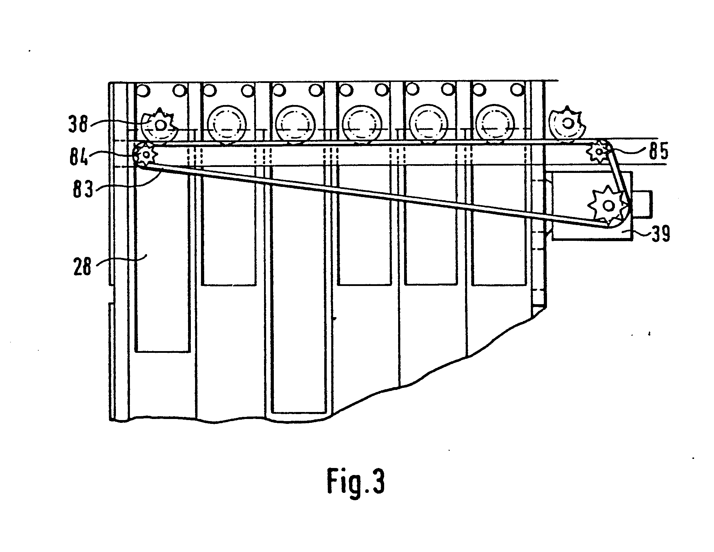

L'entraînement des transporteurs papier est assuré, ainsi que l'illustre la Figure 3 des dessins, par un pignon tel que 38 fixé sur l'axe du rouleau médian 33 de l'ensemble supérieur de rouleaux 30. Il est à noter que l'axe de chaque rouleau médian tourne avec ce dernier. Les deux extrémités de l'axe de chaque rouleau médian 33 sont à cet effet respectivement montées sur les deux flasques latérales 114 au moyen de coussinets quelconques. Les pignons 38 sont posés sur une même chaîne 83 entraînée par un moteur électrique 39 de sorte que tous les transporteurs 29 tournent à une même vitesse. La chaîne 83 est évidemment guidée à l'aide de deux pignons 84 et 85 et d'un guide linéaire situé entre les pignons 84 et 85 de sorte que le pignon 38 de chaque transporteur papier puisse coopérer avec la chaîne 83 pour ainsi entraîner les transporteurs papier 29.

Chaque transporteur papier comporte, du côté opposé au pignon 38, plusieurs pignons tels que 87 qui relient entre eux les axes des rouleaux médians de tous les ensembles de rouleaux 30 du transporteur concerné. De cette façon, comme l'axe de chaque rouleau médian tourne avec celui-ci, l'entraînement en rotation du rouleau médian supérieur 33 par le pignon 38 provoque également l'entraînement en rotation de tous les autres rouleaux médians des ensembles de rouleaux 30, et ce à une même vitesse et dans une même direction.

Tel qu'illustré par les Figures 5 et 6 des dessins, les extrémités des axes tels que 89 sur lesquels les rouleaux latéraux 36a et 36b de chaque ensemble 30 tournent sont montées dans des encoches telles que 204 à l'aide de coussinets quelconques. Les extémités correspondantes des axes 89 des rouleaux 36a et 36b de chaque ensemble 30 sont reliées par une courroie de silicone telle que 86, et ce de chaque côté du transporteur papier, de sorte qu'une pression appropriée est produite entre le rouleau médian et les deux rouleaux latéraux de chaque ensemble 30 de rouleaux. A cet effet, des poulies telles que 88 sont montées aux deux extrémités de l'axe 89 de chaque rouleau latéral et comportent chacune une gorge annulaire pour recevoir la courroie 86 correspondante. En conséquence, l'entraînement en rotation de chaque rouleau médian provoque également l'entraînement en rotation des rouleaux latéraux associés. Chaque rouleau médian 33 tourne dans la direction 230 (Figure 4), chaque rouleau latéral 36a tourne dans la direction 231 (Figure 4), et chaque rouleau latéral 36b tourne dans la direction 232 (Figure 4).

Ici, il est à noter que le chemin parcouru par la feuille de papier dans chaque tansporteur 29 est identifié par la référence 70 sur la Figure 4 des dessins.

En raison de la façon dont la feuille de papier insolée tombe sur le convoyeur 77, celle-ci circule entre les rouleaux presseurs de chaque ensemble 30 l'émulsion vers l'intérieur. A cause de la forme naturelle incurvée de la feuille de papier, celle-ci à tendance à vouloir sortir du transporteur 29 dans son déplacement entre les ensembles de trois rouleaux 30. Afin d'éviter que la feuille de papier ne sorte du transporteur, plusieurs guides verticaux et rectilignes tels que 31, fabriqués par exemple de plastique rigide, sonte montés de chaque côté des ensembles 30 et sont distribués le long des rouleaux de ces ensembles tels qu'illustrés aux Figures 4 et 5. La fonction des guides verticaux 31 est évidemment de guider la feuille de papier vers la jonction rouleau médian-rouleau latéral du prochain ensemble 30. Chaque rouleau latéral 36a, 36b des trois ensembles 30 inférieurs est formé (voir Figure 5) de plusieurs rouleaux de faible longueur interposés chacun entre deux guides 31 adjacents. Le rouleau médian 33 de tous les ensembles 30 ainsi que les rouleaux latéraux 36a et 36b de l'ensemble 30 supérieur sont tant qu'à eux formés chacun par un rouleau unique. Il est à noter que les guides verticaux 31 sont montés sur les axes tels que 89 sur lesquels les rouleaux latéraux 36a et 36b tournent.

Se référant aux Figures 4 et 5 des dessins, chaque transporteur 29 est muni à sa partie inférieure d'un virage composé de plusieurs guides de plastique rigide 32 ayant chacun une surface supérieure de guidage définissant un demicercle centré sur l'axe de rotation du rouleau médian 33 inférieur. Le demi-cercle ainsi défini dirige la feuille de papier de sorte qu'elle suive la surface cylindrique du rouleau médian inférieur 33 pour ainsi remonter. Chaque guide 32 est aligné avec une paire correspondante de guides 31. Les guides 32 sont montés entre les deux flasques latérales 114 sur des tiges 200.

Afin que la feuille de papier puisse changer de cuve en passant d'un transporteur 29 à un autre, il est prévu des ensembles tels que 35 de guides en plastique rigide. Ces guides sont alignés avec les guides verticaux 31 et comportent chacun une surface inférieure de guidage qui définit un arc de cercle. Tel qu'illustré sur la Figure 4 par le chemin 79 parcouru par la feuille de papier, cette dernière suit l'arc de cercle défini par les guides de l'ensemble 36 lorsqu'elle quitte la jonction rouleau médian 33 - rouleau latéral 36b de l'ensemble 30 supérieur. Elle est ensuite dirigée par l'arc de cercle vers la jonction rouleau médian 33 - rouleau latéral 36a de l'ensemble 30 supérieur du transporteur suivant. Un virage très brusque est ainsi obtenu, lequel permet à la feuille de papier de se diriger rapidement vers le transporteur de la cuve suivante afin que la feuille de papier pénètre au plus tôt dans cette dernière.

La Figure 5 représente des éléments de positionnement 202 et 203 de chaque transporteur papier 29. Deux éléments 202 sont montés sur une première flasque latérale 114 tandis que deux éléments 203 sont montés sur l'autre flasque latérale 114 aux emplacements indiqués par la référence 205 sur la Figure 4. Les éléments 202 et 203 coopèrent avec un cadre correspondant de l'unité centrale 1 pour ainsi permettre la mise en place du transporteur 29 dans sa cuve 28. Les éléments de positionnement 202 et 203 se prolongent à l'intérieur des flasques 114.

Les quides de chaque ensemble 35 sont reliés entre eux à l'aide d'une tige 206. En outre, chaque ensemble 35 est muni de deux pièces de positionnement 207 et de deux pièces de positionnement 208 respectivement montées sur les deux guides d'extrémité. Les pièces 207 peuvent être positionnées sur les deux éléments 202 adjacents de deux tansporteurs 29 adjacents, tandis que les pièces 208 peuvent être positionnées sur les deux éléments 203 adjacents des deux mêmes transporteurs 29 adjacents, pour ainsi monter l'ensemble 35. Chaque ensemble 35 est muni d'une poignée 201 pour en faciliter la manipulation.

Une fois l'épreuve développée et lavée, celle-ci quitte le transporteur 29 de la dernière cuve 90 et entre dans le transporteur de séchage 40 muni de plusieurs rouleaux transporteurs de papier 91 et de courroies associées (non illustrées). Lors de son passage dans le transporteur de séchage 40, l'épreuve est soumise à un courant d'air chaud pour fins de séchage. Le système de production de ce courant d'air chaud est conventionnel et ne sera par conséquent pas décrit davantage dans la présente description. Finalement, l'épreuve séchée est transférée du transporteur de séchage 40 au bac de récupération 41.

Tel qu'explicité ci-dessus avec référence à la Figure 1 des dessins, le module photocopie 2 peut être aisément détaché de l'unité centrale 1 et être remplacé par tout autre module.

La Figure 2b) des dessins montre un module projecteur de diapositives 2′ dont l'enveloppe est de structure similaire à celle du module photocopie 2. Evidemment, la façon de le monter sur l'unité centrale 1 est la même que celle explicitée avec référence au module photocopie 2.

Le module diapositive 2′ comporte à l'intérieur de son enveloppe un projecteur de diapositives 42 avec magasin rotatif de diapositives 92. Le magasin 92 est bien entendu accessible par l'intermédiaire d'une ouverture située sur le dessus de l'enveloppe du module 2′ et qui peut être refermée à l'aide d'un couvercle. Evidemment, le projecteur 42 comprend un objectif 93 inséré dans l'orifice 4 (Figure 1) de sorte qu'il se trouve positionné en face de la tourelle des filtres 8. Le projecteur 42 peut alors projeter une image lumineuse sur le papier photographique retenu par aspiration d'air sur la plaque 24.

L'arrangement de la Figure 2b) permet, par contrôle du projecteur de diapositives, d'exécuter automatiquement des tirages de plusieurs diapositives sur papier photographique.

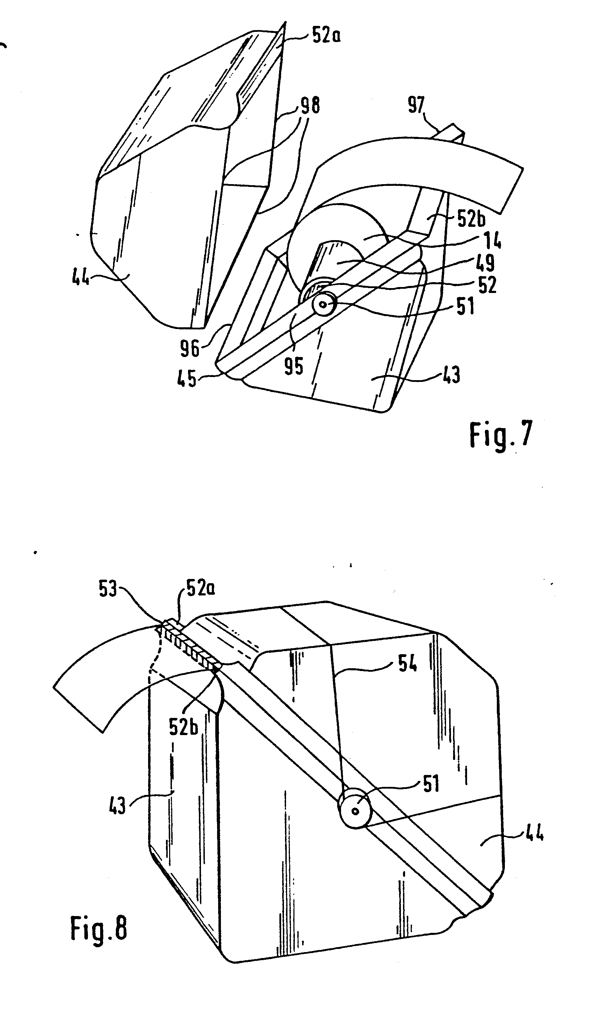

Les Figures 7, 8, 9 et 10 montrent les détails de la cassette papier 15 du photocopieur de la Figure 2a). Celle-ci se présente sous la forme d'un cube creux partagé par la diagonale en deux coquilles 43 et 44, qui peuvent être assemblées et séparées de manière à permettre le remplissage de la cassette.

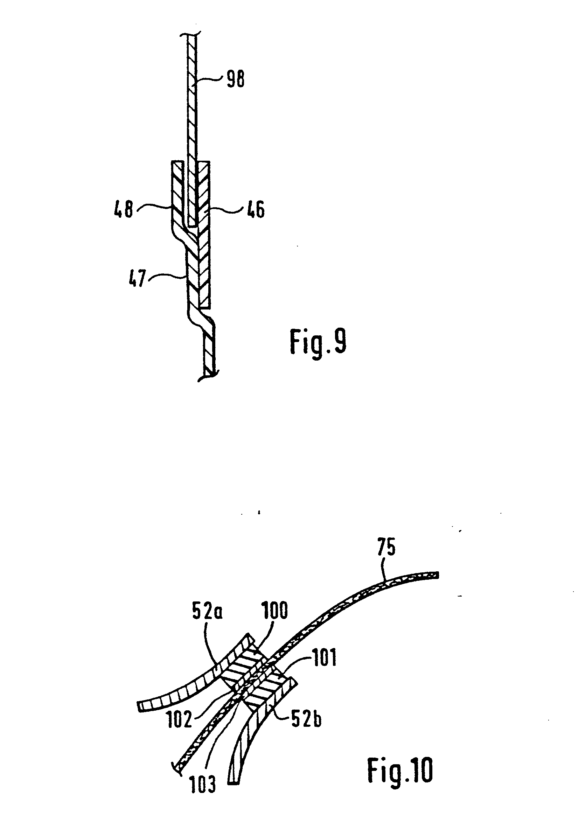

La coquille 43 est dotée sur une portion de son rebord (95, 96 et 97) d'une chicane 45 à deux marches assurant l'emboîtement de la coquille 44 sur la coquille 43. La Figure 9 illustre de façon détaillée le principe d'emboîtement des deux coquilles 43 et 44. Une bande de matière plastique rapportée 46 interne à la coquille 43, de largeur substantiellement égale à celle de la chicane, et destinée à assurer l'étanchéité à la lumière de la cassette papier est accolée à la marche inférieure 47 de la chicane 45 de telle manière que le rebord 98 de la coquille 44 vienne s'emboîter entre la marche supérieure 48 de la chicane 45 et la bande de matière plastique rapportée 46.

Chacune des coquilles 43 et 44 est obtenue par un procédé de thermoformage. Une matière plastique pouvant être utilisée est l'A.B.S. Celui-ci doit cependant être assez épais de telle sorte qu'après étirement il demeure non transparent, pour ainsi assurer l'étanchéité de la cassette 15 à la lumière.

Tel qu'illustré à la Figure 7, le rouleau de papier 14 est supporté par un mandrin 49 qui vient s'enclencher en force entre les flasques latérales de la coquille 43, par déformation de ces flasques. Ce mandrin est monté à ses deux extrémités au niveau de la chicane 45 à l'aide de deux écrous de fixation tels que 51 formant en dehors de la coquille 43 une poulie. Des rondelles annulaires de feutre telles que 52 sont collées sur les deux extrémités du mandrin et viennent frotter contre les flasques latérales de la coquille 43 lors de la rotation du rouleau 14 et par conséquent du mandrin 49. Ceci permet d'éviter la rotation du mandrin par inertie et produit aussi une certaine tension dans le papier lors de son déroulement par les rouleaux 18 et 19 (Figure 2a)).

La Figure 10 illustre les détails du dispositif de libération du papier de la cassette. Le rebord 52a de la coquille 44 et celui 52b de la coquille 43 sont recourbés vers l'extérieur de façon à définir une ouverture. Une bande 100 de caoutchouc mousse adhésive sur les deux côtés est montée sur le rebord 52a de la coquille 44 tandis qu'une bande 101 de caoutchouc mousse adhésive sur les deux côtés est montée sur le rebord 52b de la coquille 43. Sur l'autre côté des bandes 100 et 101 est retenue par adhésion une bande de feutre 102 et 103, respectivement. Le papier 75 peut alors glisser entre les bandes de feutre 102 et 103, et l'étanchéité à la lumière de la cassette dans l'ouverture définie par les rebords 52a et 52b est en même temps assurée.

La Figure 8 présente un mode de fermeture de la cassette 15. Pour réaliser cette fonction, une courroie 54 enserre la coquille 44 et vients s'accrocher de chaque côté de la cassette dans la gorge des poulies formées par les écrous 51 de fixation du mandrin 49.

Il est facile de concevoir que la cassette papier décrite ci-dessus peut être fabriquée à coût modique. Ceci permettra dans un premier temps à l'utilisateur d'acquérir plusieurs cassettes, ce qui lui évitera les incommodes changements de type de papier en chambre noire. En effet, chaque cassette à la disposition de l'utilisateur pourra contenir un type de papier différent il suffira donc de changer la cassette pour changer le type de papier. Dans un deuxième temps, de telles cassettes pourront être serties avec un rouleau de papier photographique à l'intérieur afin d'en faire des cassettes jetables peu coûteuses. Lorsque le papier dans le cassette aura été épuisé, il suffira d'acheter une nouvelle cassette. Il ne sera donc plus nécessaire que l'utilisateur dispose d'une chambre noire pour le remplissage des cassettes avec du papier sensible à la lumière.

Le photocopieur selon l'invention peut de plus comprendre un module de préparation et de régénération des bains chimiques se trouvant dans les cuves 28 de la Figure 2a).

Il est bien connu que les bains chimiques utilisés dans un photocopieur pour la reproduction photographique s'altèrent avec le temps et avec le nombre de développements d'épreuves.

L'utilisateur est donc amené à préparer de nouveaux mélanges chimiques et à les introduire dans les cuves correspondantes 28 une fois quel celles-ci auront été vidées des bains précédents. Une autre alternative, utilisée dans la présente invention est de compenser la baisse d'efficacité des bains en injectant des mélanges chimiques plus concentrés dans ceux-ci.

Pour réaliser cette dernière fonction, le photocopieur comporte un module de préparation et de régénération des bains. Ce module permet d'éviter les manipulations précédemment décrites - préparation de nouveaux mélanges chimiques et introduction de ceux-ci dans les cuves -et de régénérer automatiquement les bains sans intervention ni contrôle manuel. Cela permet en outre de maintenir le standard de qualité des photographies produites par le photocopieur.

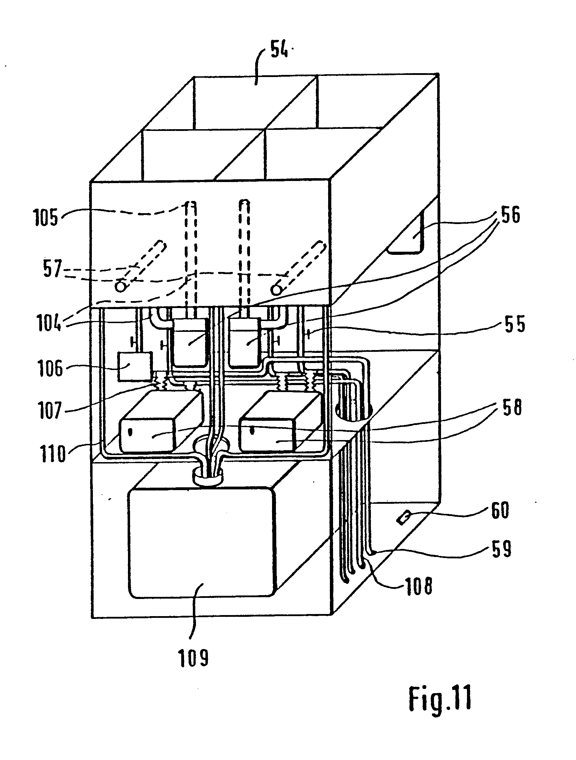

Tel qu'illustré à la Figure 11 des dessins, le module de préparation et de régénération des bains est consitué de cuves telles que 54 qui sont transparentes, qui sont graduées extérieurement, qui correspondent chacune à un mélange chimique différent, et qui servent à mélanger les bains chimiques. Bien entendu, le nombre de cuves 54 correspond au nombre de bains chimiques requis.

Lorsque les bains chimiques sont préparés, des robinets tels que 55 sont en position fermée. L'utilisateur remplit alors les cuves 54 avec de l'eau et avec les constituants des mélanges chimiques, et ce dans les quantités requises.

Des pompes 56 mélangent les bains dans les différentes cuves 54 en faisant circuler le liquide à partir d'un orifice situé dans le fond de chaque cuve 54, jusqu'à un orifice supérieur tel que 105 et ce à travers des tuyaux 104. Chaque pompe 56 aspire donc le liquide de la partie inférieure de la cuve 54 correspondante pour le rejeter dans la partie supérieure sans l'oxyder, l'orifice supérieur 105 devant donc se trouver immergé dans le liquide de la cuve 54.

Un dispositif de chauffage tel que 57 est prévu dans chacune des cuves 54 afin de permettre le chauffage du liquide si la procédure de mélange le requiert. Un tel dispositif de chauffage 57 peut avantageusement comporter des résistance électriques chauffantes dont l'alimentation est contrôlée à l'aide d'un thermostat sensible à la température du liquide dans la cuve 54 correspondante.

Lorsque les bains chimiques dans les cuves 54 ont été réalisés et mélangés, les robinets 55 sont ouverts. Des cuves tampons telles que 106 sont alors remplies du mélange chimique se trouvant dans la cuve 54 correspondante. Pour fins de simplification des dessins, une seule de ces cuves tampons 106 a été illustrée sur la Figure 11.

Des pompes doseuses telles que 107 sont actionnées, en fonction du nombre d'épreuves développées, par des systèmes électro-mécaniques appropriés 58 pour transférer le mélange des cuves tampons 106 vers les cuves 28 de l'unité centrale 1 à travers des conduits tels que 108. Evidemment, les mélanges chimiques frais sont introduits dans la partie inférieure des cuves 28. Ces mêmes cuves sont munies de trop-pleins qui évacuent le liquide en trop, lequel est dirigé à l'aide de conduits vers un bidon de récupération 109 suitué à la partie inférieure du module de la Figure 11.

Evidemment, des tuyaux relient les embouts tels que 59 des conduits 108 à la partie inférieure des cuves 28 du photocopieur de manière à permettre d'injecter le mélange plus concentré.

D'autres conduits tels que 110 sont prévus pour relier la parties inférieure des cuves 54 au bidon de récupération 109 afin de permettre l'évacuation du liquide se trouvant dans les cuves en question. Evidemment, des valves à double voie (non illustrées) sont prévues pour chaque cuve 54 afin de diriger le liquide provenant de la cuve soit vers les canalisations 110 reliées au bidon 109, soit vers les canalisations qui conduisent aux robinets 55 et aux cuves tampons 106.

Un connecteur 60 permet de relier le module des bains de la Figure 11 à l'électronique de contrôle et à la source d'alimentation du photocopieur. L'électronique de contrôle compte le nombre d'impulsions générées par un transducteur en réponse à la rotation du rouleau 18 (Figure 2a)) afin de déterminer la surface de papier photographique développée et contrôle en fonction de cette information le module de la Figure 11 par l'intermédiaire du connecteur 60 afin d'injecter dans les cuves 28 de l'unité de développement une quantité de mélange chimique frais lorsque requis.

L'électronique de contrôle du photocopieur qui peut évidemment être conçue autour d'un microprocesseur, effectue un contrôle centralisé de toutes les fonctions exécutées par l'unité centrale 1, le module des bains et le module d'exposition des documents originaux. Evidemment, un tel contrôle doit inclure tous les détecteurs et interfaces requis pour superviser et contrôler le fonctionnement global du photocopieur, par exemple pour effectuer la mise en marche et l'arrêt des différents moteurs. Comme les contrôles électroniques de ce type sont bien connus dans la technique, il ne semble pas utile de décrire en détail celui du photocopieur selon l'invention.

**Revendications**

1) Photocopieur pour la reproduction photographique, caractérisé en ce qu'il comprend :
une unité centrale (1) munie de moyens d'alimentation en papier photographique, de moyens de positionnement du papier d'alimentation en position d'insolation, de moyens de séchage du papier développé, et de moyens de récupération du papier développé et séché, incluant des moyens de transport du papier insolé à partir de sa position d'insolation à travers les moyens de développement et de séchage vers les moyens de récupération du papier ; et

un module amovible d'exposition (2) d'un document original à reproduire ;

ladite unité centrale (1) comportant en outre des moyens de support et de positionnement dudit module d'exposition amovible (2) ;

ledit module d'exposition (2) comportant des moyens pour former une image lumineuse à partir due document original ; et

ladite unité centrale (1) comprenant des moyens pour exposer le papier photographique en position d'insolation à ladite image lumineuse formée par le module d'exposition (2) pour ainsi insoler ledit papier.

2) Photocopieur selon la revendication 1, caractérisé en ce que ledit module d'exposition (2) est équipé d'un objectif (7), et en ce que ladite unité centrale (1) comprend une enveloppe présentant un orifice (4) dans lequel ledit objectif (7) est introduit, ladite image lumineuse étant transmise vers le papier en position d'insolation à travers ledit objectif (7) et par conséquent à travers ledit orifice (4).

3) Photocopieur selon la revendication 1, caractérisé en ce que ladite unité centrale (1) et ledit module d'exposition (2) comprennent chacun une enveloppe, et en ce que les moyens de support et de positionnement du module d'exposition (2) comprennent une surface horizontale (6) définie par l'enveloppe de l'unité centrale (1) et un décrochement (3) formé sur une surface substantiellement verticale de ladite enveloppe de l'unité centrale (1), lesdites surfaces horizontale et substantiellement verticale étant adjacentes, l'enveloppe du module d'exposition (2) ayant une ouverture (70) dans laquelle ledit décrochement (3) s'emboîte lors du positionnement du module d'exposition (2) sur l'unité centrale (1).

4) Photocopieur selon la revendication 1, caractérisé en ce que les moyens de support et de positionnement du module d'exposition (2) comprennent une paire de rails (73, 74).

5) Photocopieur selon la revendication 3, caractérisé en ce que les moyens de support et de positionnement du module d'exposition (2) comprennent des aimants (71, 72) de forte puissance pour maintenir en place ledit module d'exposition amovible (2).

6) Photocopieur selon la revendication 1, caractérisé en ce que lesdits moyens de formation d'une image lumineuse du module d'exposition (2) comportent des moyens pour former une image lumineuse à partir d'une photographie constituant ledit document original.

7) Photocopieur selon la revendication 1, caractérisé en ce que lesdits moyens de formation d'une image lumineuse du module d'exposition (2) comprennent des moyens pour former une image lumineuse à partir d'une diapositive constituant ledit document original.

8) Photocopieur selon la revendication 1, caractérisé en ce que les moyens de développement photographique comportent des cuves remplies de bains chimiques et de bains de lavage, lesdits moyens de transport du papier comprenant dans chacune desdites cuves un transporteur papier (29) qui comporte :

- des flaques (114) de support latérales ;

- des ensembles (30) de rouleaux rotatifs disposés en étages, chacun desdits rouleaux étant fixé à ses extrémités auxdites flasques latérales (114) ; et

- des moyens pour guider le papier insolé d'un ensemble de roulieaux à l'autre au cours de son avancement.

9) Photocopieur selon la revendication 8, caractérisé en ce que les moyens de guidage du papier insolé de chaque transporteur papier (29) comportent des guides allongés er verticaux (31) situés des deux côtés desdits ensembles (30) de rouleaux.

10) Photocopieur selon la revendication 1, caractérisé en ce que les moyens de développement photographique comportent des cuves remplies de bains chimiques et de bains de lavage, et en ce que lesdits moyens de transport du papier comprennent :

- un transporteur papier (29) dans chacune desdites cuves, chaque transporteur papier (29) comportant un ensemble supérieur de trois rouleaux rotatifs incluant un rouleau médian (33), et deux rouleaux latéraux (36a, 36b) situés de chaque côté du rouleau médian (33) et en contact avec ledit rouleau médian; et

- des moyens pour guider le papier insolé sortant du transporteur papier (29) d'une desdites cuves à travers une jonction rouleau médian-rouleau latéral de l'ensemble supérieur de rouleaux correspondant, vers une jonction rouleau médian-rouleau latéral de l'ensemble (30) supérieur de rouleaux du transporteur papier (29) de la cuve suivante.

11) Photocopieur selon la revendication 10, caractérisé en ce que lesdits moyens de guidage du papier insolé comportent plusieurs guides (32, 35) distribués le long des ensembles (30) supérieurs de rouleaux des deux transporteurs papier (29) et définissant chacun une surface de guidage incurvée.

12) Photocopieur selon la revendication 1, caractérisé en ce que les moyens d'alimentation en papier comportent des moyens pour stocker un rouleau (14) de papier photographique incluant une cassette (15) en matière plastique définissant deux flasques latérales, et un mandrin (49) rotatif de support de rouleau (14) de papier, ledit mandrin (49) étant monté en force entre les flasques latérales de la cassette (15), par déformation desdites flasques.

13) Photocopieur selon la revendication 12, caractérisé en ce que les moyens d'alimentation en papier photographique comprennent en outre des moyens de déroulement du rouleau de papier et de coupe dudit papier.

14) Photocopieur selon la revendication 12, caractérisé en ce que deux rondelles annulaires de feutre (52) sont respectivement collées à chacune des deux extrémités dudit mandrin (49), lesdites rondelles de feutre (52) venant frotter contre les flasques latérales de ladite cassette (15) pour éviter la rotation du mandrin par inertie et pour produire une certaine tension dans le papier lors du déroulement du rouleau (14).

15) Photocopieur selon la revendication 12, caractérisé en ce que la cassette (15) est obtenue par un procédé de thermoformage.

16) Photocopieur selon la revendication 12, caractérisé en ce que la matière plastique constituant ladite cassette (15) est l'A.B.S.

17) Photocopieur selon la revendication 12, caractérisé en ce que la cassette comprend :
- une partie (43) faisant office de récipient et comportant une ouverture ayant un rebord (95, 96, 97) qui définit sur une portion de sa périphérie une chicane (45) à deux marches, c'est-à-dire une marche supérieure (48) et une marche inférieure (47) ; et
- une partie (44) faisant office de couvercle de la partie (43) faisant office de récipient, ladite partie faisant office de couvercle (44) venant s'emboîter au niveau de la marche supérieure (48) de ladite chicane (45).

18) Photocopieur selon la revendication 17, caractérisé en ce que ladite partie faisant office de récipient (43) comporte, pour assurer l'étanchéité à la lumière de la cassette, un bande (46) d'une largeur substantiellemnt égale à celle de la chicane (45), et rapportée le long de la marche inférieure (47) de la chicane (45) pour définir avec la marche supérieure (48) de celle-ci une gorge, la partie faisant office de couvercle (44) définissant un rebord (98) qui vient s'emboîter dans ladite gorge.

19) Photocopieur selon la revendication 17, caractérisé en ce que la cassette (15) comprend des moyens de libération du papier formés par un rebord (52a) de la partie faisant office de couvercle (44) recourbé vers lextérieur de la cassette (15), et un rebord (52b) de la partie faisant office de récipient (43) également recourbé vers l'extérieur de la cassette (15), lesdits rebords (52a, 52b) recourbés vers l'extérieur des deux parties de la cassette (15) définissant entre eux une ouverture de libération du papier, lesdits moyens de libération du papier comprenant des moyens disposés dans ladite ouverture de libération, et permettant le glissement du papier vers l'extérieur de la cassette pour ainsi dérouler le rouleau (14) tout en assurant une étanchéité à la lumière.

20) Photocopieur selon la revendication 19, caractérisé en ce que lesdits moyens disposés dans l'ouverture de libération et permettant le glissement du papier tout en assurant une étanchéité à la lumière comportent au moins une bande de feutre (102, 103) montée sur l'un desdits rebords (52a, 52b) recourbés.

21) Photocopieur selon la revendication 17, caractérisé en ce que les parties de la cassette faisant office de récipient et de couvercle ont la forme de coquilles (43, 44).

22) Photocopieur selon la revendication 21, caractérisé en ce que la cassette comprend deux poulies avec gorges, fixées au niveau de la chicane (45) à l'extérieur des flasques latérales de la coquille faisant office de récipient (43), et une courroie (54) ceinturant la coquille faisant office de couvercle (44) et s'accrochant dans les gorges desdites deux poulies.

23) Photocopieur selon la revendication 1, caractérisé en ce que lesdits moyens de récupération du papier développé et séché comprennent un bac de récupération (41).

24) Photocopieur selon la revendication 1, caractérisé en ce que lesdits moyens de développement comprennent des cuves remplies de bains chimiques, et en ce que ledit photocopieur comprend un module de préparation et de régénération de ces bains qui inclut pour chaque bain :
- une cuve de préparation du bain (54), cette préparation consistant à verser dans la cuve de préparation les différents constituants dudit bain et à les mélanger ;
- une cuve tampon reliée à ladite cuve de préparation (54) par l'intermédiaire d'un robinet (55), ledit robinet étant fermé lors de la préparation du bain et ouvert lorsque cette préparation a été effectuée de sorte que la cuve tampon (106) est remplie du bain lorsque sa préparation est terminée ;
- une pompe doseuse (107), interposée entre ladite cuve tampon (106) et la cuve des moyens de développement (28) remplie dudit bain, pour injecter dans cette cuve des moyens de développement du bain chimique stocké dans la cuve tampon (106) et ainsi régénérer le bain de la cuve (28) des moyens de développement, cette dernière étant munie d'un trop-plein pour éliminer le bain en trop.

25) Photocopieur selon la revendication 24, caractérisé en ce que le module des bains comportent un élément de connexion électrique (60) à l'unité centrale (1) afin que cette dernière puisse contrôler le fonctionnement des pompes doseuses en fonction de la surface du papier photographique développé.

26) Photocopieur selon la revendication 24, caractérisé en ce que le module de préparation et de régénération des bains inclut au moins une pompe (56) pour mélanger les constituants des bains dans les cuves de préparation (54).

27) Photocopieur selon la revendication 24, caractérisé en ce que le module de préparation et de régérération des bains comporte des moyens de chauffage (57) dudit bain à une température prédéterminée lors de sa préparation.

Fig.1

Fig. 2a

Fig. 2b

0262001

0262001

Fig.3

0262001

Fig.4

0262001

Fig.5

0262001

Fig.6

0262001

Fig.7

Fig.8

0262001

Fig.9

Fig.10

0262001

Fig.11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 8, no. 14 (P-249)[1451], 21 Janvier 1984; & JP - A - 58 174 930 (FUJI SHASHIN FILM) 14-10-1983 --- | 1 | G 03 B 27/32 |
| A | EP-A-0 153 824 (MITA INDUSTRIAL) * revendication 1, figures 1, 5, 6 * --- | 1 | |
| A | GB-A-2 139 984 (NORITSU KENKYU CENTER) * figure 2 * --- | 1 | |
| A | US-A-4 114 999 (M. KOGISO et al.) * revendication 1; abrégé * --- | 1 | |
| A | US-A-3 565 526 (D.A. VAN GEMEREN) * figure 1 * --- | 1 | |
| A | US-A-3 511 160 (G.L. VAN REUSEL) * figure 1 * --- | 1 | |
| A | FR-A-2 529 692 (SOCIETE PHOTOSYSTEME SARL.) * figure 1 * ----- | | DOMAINES TECHNIQUES RECHERCHES (Int. Cl.4) G 03 B 17/00 G 03 B 27/00 G 03 D 3/00 G 03 G 15/00 |

Le présent rapport a été établi pour toutes les revendications

| Lieu de la recherche | Date d'achèvement de la recherche | Examinateur |
|---|---|---|
| BERLIN | 09-12-1987 | HOPPE H |

EPO FORM 1503 03.82 (P0402)